# EUROPEAN PATENT APPLICATION

(11) **EP 4 516 641 A1**
(43) Date of publication of application: **05.03.2025**
(21) Application number: 23815690.5
(22) Date of filing: 08.05.2023
(51) Int. Cl.: B62D 21/15, B62D 25/20, B60K 1/04

(54) **VEHICLE BODY SIDE PART STRUCTURE**

(30) Priority: 03.06.2022 JP 2022090636
(71) Applicant: JFE Steel Corporation, Tokyo 100-0011 (JP); Suzuki Motor Corporation, Shizuoka 432-8611 (JP)
(72) Inventor: SAITO, Takanobu, Tokyo 100-0011 (JP); TSURU, Shotaro, Hamamatsu-shi, Shizuoka 432-8611 (JP); KURIAGE, Yoshitaka, Hamamatsu-shi, Shizuoka 432-8611 (JP)
(74) Representative: Haseltine Lake Kempner LLP
(86) International application number: PCT/JP2023/017303
(87) International publication number: WO 2023/233929

(57) **Abstract**

An automotive body side structure 1 according to the present invention includes a side sill 3 extending in a vehicle length direction, and a battery pack 5 disposed vehicle inside in the vehicle width direction relative to the side sill 3, and includes collision energy absorptive part 11 provided in a protruding shape toward vehicle outside in the vehicle width direction on an outer peripheral side in the vehicle width direction of the battery pack 5, having a steel sheet having a tensile strength of 270 MPa-class or more and 340 MPa-class or less and a plate thickness of 1.0 mm or more and 1.4 mm or less, wherein at a time of a side collision in which a collision load is input to the side sill 3 from vehicle outside in the vehicle width direction, after the side sill 3 deformed by the input collision load comes into contact with the collision energy absorptive part 11, the collision energy absorptive part 11 is deformed to absorb collision energy to reduce a load transferred to the battery pack 5.

## Description

### Field

The present invention relates to an automotive body side structure such as a battery powered vehicle (battery electric vehicle) in which a battery pack is disposed vehicle inside in the vehicle width direction relative to a side sill.

### Background

In recent years, particularly in the automobile industry, replacement from a gasoline engine car due to environmental problems to a battery powered vehicle or the like is in progress. In a battery powered vehicle or the like, a battery pack accommodating a large battery is disposed on a floor portion of a lower part of a vehicle body. Further, since a lithium (Li) based material is often used for the battery, when the battery pack is damaged at the time of a collision and liquid leakage from the battery occurs, there is a possibility of fire, and thus a structure for protecting the battery pack is required. Side sills are provided on both outer sides in the vehicle width direction to protect the battery pack, and the battery pack is disposed between the side sills.

As a technique for protecting a battery pack, for example, Patent Literature 1 discloses a technique in which, in a vehicle including a locker (side sill) having a closed cross section portion and a battery pack fixed to the locker in a state of being supported from below, a ladder-like impact absorption part formed using an aluminum alloy or the like and having a closed cross section structure is provided in the locker. Further, according to this technique, it is considered that the impact absorption part can absorb collision energy (crush energy) by plastic deformation of the impact absorption part at the time of a side collision (side impact collision) of the vehicle, thereby protecting the battery pack.

Patent Literature 2 discloses a technique for detachably fixing a battery pack to a floor side member and suspending and supporting the battery pack on a floor panel. According to the technique, the side collision (side impact collision) fixation of the vehicle body is released, and the battery pack is supported only on the floor panel, so that the battery pack can be appropriately protected.

### Citation List

### Patent Literature

Patent Literature 1: JP 6930267 B
Patent Literature 2: JP 2019-167060 A

### Summary

### Technical Problem

As a structure for protecting the battery pack, it is important to dispose a collision energy absorptive part (a part for impact energy absorption) for absorbing collision energy around the battery pack. However, in the technique disclosed in Patent Literature 1, the closed cross section structure of the impact absorption part (a collision energy absorptive part) formed in the locker (side sill) is complicated, and the weight is heavy, which may adversely affect fuel efficiency. Furthermore, in the case of using an aluminum alloy, it is difficult to manufacture at low cost. In addition, since the closed cross section structure of the impact absorption part is robust, there is a possibility that the battery pack is damaged by excessively transferring a load to the battery pack during deformation of the locker (side sill) at the time of a side collision.

In the technique disclosed in Patent Literature 2, the battery pack is detached from the floor side member and is supported only on the floor panel at the time of a side collision of the vehicle. For this reason, in addition to the possibility that the battery pack falls off and is damaged, when a mechanism for releasing the fixed state does not work, there is a possibility that a collision load (crushing load) is input to the battery pack through the deformed side sill and is damaged. Therefore, in a vehicle including a side sill and a battery pack disposed vehicle inside in the vehicle width direction relative to the side sill, a structure for efficiently and reliably absorbing collision energy to protect the battery pack at a time of a side collision has been required.

The present invention has been made to solve the above problems, and an object of the present invention is to provide an automotive body side structure capable of efficiently and reliably absorbing collision energy and protecting a battery pack at a time of a side collision of a vehicle body including a side sill and the battery pack disposed vehicle inside in the vehicle width direction relative to the side sill.

### Solution to Problem

An automotive body side structure according to the present invention includes: a side sill extending in a vehicle length direction; and a battery pack disposed vehicle inside in a vehicle width direction relative to the side sill, wherein the automotive body side structure includes a collision energy absorptive part having a substantially U-shaped cross section, the substantially U-shaped cross section including: a bottom portion substantially parallel to a vehicle height direction; and a pair of side wall portions continuous from an upper end and a lower end of the bottom portion, the collision energy absorptive part is provided in a protruding shape toward vehicle outside in the vehicle width direction while securing a space with the side sill on an outer peripheral side in the vehicle width direction of the battery pack, and the collision energy absorptive part is made of a steel sheet having a tensile strength of 270 MPa-class or more and 340 MPa-class or less and a plate thickness of 1.0 mm or more and 1.4 mm or less, and at a time of a side collision in which a collision load is input to the side sill from vehicle outside in the vehicle width direction, after the side sill deformed by the input collision load comes into contact with the collision energy absorptive part, the collision energy absorptive part is deformed to absorb collision energy to reduce a load transferred to the battery pack.

The collision energy absorptive part may have an aspect ratio of a width in the vehicle width direction with respect to a height in the vehicle height direction in a range of 0.4 or more and 2.5 or less.

The collision energy absorptive part may be inclined in a direction in which the pair of side wall portions approach each other toward vehicle outside in the vehicle width direction.

The collision energy absorptive part may include one of the side wall portions parallel to a horizontal line in the vehicle width direction and another one of the side wall portions inclined in a direction approaching the one of the side wall portions toward vehicle outside in the vehicle width direction.

### Advantageous Effects of Invention

According to the present invention, it is possible to make it difficult to transfer the collision load input to the vehicle to the battery pack at a time of a side collision of the vehicle in which the battery pack is disposed vehicle inside in the vehicle width direction relative to the side sill. As a result, deformation of the battery pack can be suppressed at the time of a side collision, the battery pack of a battery powered vehicle or the like can be protected, and a safe vehicle can be made.

### Brief Description of Drawings

FIG. 1 is a diagram illustrating an automotive body side structure according to an embodiment of the present invention.
FIG. 2 is a view for describing a specific example of a shape of a collision energy absorptive part in the automotive body side structure according to the embodiment of the present invention.
FIG. 3 is a diagram for describing a side collision of a vehicle to be analyzed in the embodiment.
FIG. 4 is a diagram illustrating a deformation amount of a battery pack and a method of evaluating an input load to the battery pack in an example ((a) Evaluation position of deformation amount of battery pack, (b) Input load to battery pack).
FIG. 5 is a diagram illustrating an automotive body side structure according to Invention Example 1 to Invention Example 3 in the embodiment ((a) Invention Example 1, (b) Invention Example 2, (c) Invention Example 3).
FIG. 6 is a diagram illustrating an automotive body side structure according to Invention Example 4, Invention Example 5, and a Conventional Example in the embodiment ((a) Invention Example 4, (b) Invention Example 5, (c) Conventional Example).
FIG. 7 is a graph illustrating a result of a contact reaction force obtained as an input load to a battery pack in the example.
FIG. 8 is a graph illustrating a maximum value of a contact reaction force obtained as an input load to a battery pack in a case where the aspect ratio of the collision energy absorptive part is changed in the example.
FIG. 9 is a diagram illustrating a deformation state in a side collision process of the automotive body side structure according to Invention Example 1 to Invention Example 5 and the Conventional Example in the example ((a) Invention Example 1, (b) Invention Example 2, (c) Invention Example 3, (d) Invention Example 4, (e) Invention Example 5, and (f) Conventional Example).
FIG. 10 is a graph illustrating a deformation amount and a contact reaction force of the battery pack in a case where the tensile strength and the plate thickness of the steel sheet used for the collision energy absorptive part of the automotive body side structure according to the Invention Example are changed in the example.

### Description of Embodiments

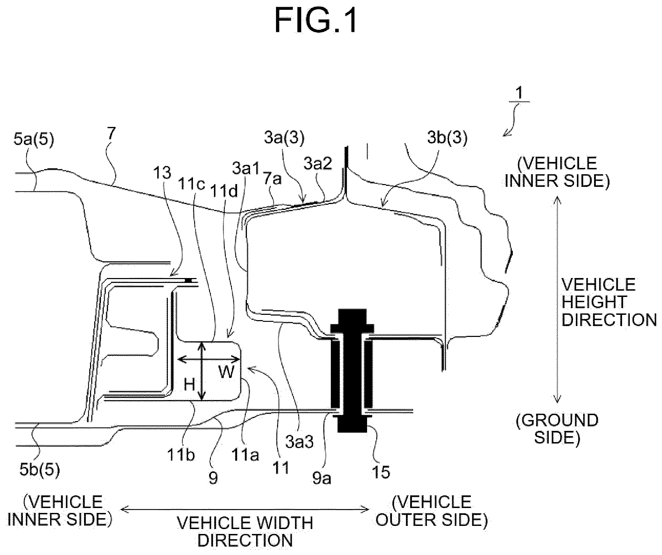

As illustrated in FIG. 1 as an example, an automotive body side structure 1 according to the embodiment of the present invention includes a side sill 3 extending in the vehicle length direction, a battery pack 5 disposed vehicle inside in the vehicle width direction relative to the side sill 3, a floor cross member 7, and a ground side cross member 9. The automotive body side structure 1 according to the embodiment of the present invention includes a collision energy absorptive part 11 on the outer peripheral side in the vehicle width direction of the battery pack 5. Hereinafter, an automotive body side structure 1 according to the present embodiment will be described with reference to FIG. 1. In the present specification and the drawings, elements having the same functional configuration are denoted by the same reference numerals, and redundant description will be omitted.

As illustrated in FIG. 1, the side sill 3 includes a side sill inner 3a having a groove shape that opens toward vehicle outside in the vehicle width direction, and a side sill outer 3b having a groove shape that opens toward vehicle inside in the vehicle width direction. The side sill inner 3a and the side sill outer 3b face each other on the opening side, and a vehicle body upper side end portion and a vehicle body lower side end portion are joined to form a closed cross section structure. The groove shape of the side sill inner 3a has a hat-shaped cross section by a bottom portion 3a1 substantially parallel to the vehicle height direction and a pair of side wall portions 3a2 and 3a3 continuous from the upper end and the lower end of the bottom portion 3a1.

The battery pack 5 has a battery cell (not illustrated) mounted therein, and includes a battery pack upper 5a and a battery pack lower 5b. The battery pack 5 is supported by a battery frame assembly 13 disposed on the outer peripheral side in the vehicle width direction. In the present embodiment, as illustrated in FIG. 1, the battery frame assembly 13 includes a plurality of steel sheet parts.

The floor cross member 7 is disposed above the battery pack 5 in the vehicle, and a vehicle outer side end portion 7a in the vehicle width direction is connected to the upper part of the side sill inner 3a.

The ground side cross member 9 is disposed below the battery pack 5 in the vehicle body, and a vehicle outer side end portion 9a in the vehicle width direction is fastened to the lower part of the side sill 3 with a bolt 15.

The collision energy absorptive part 11 includes a substantially U-shaped cross section 11d having a bottom portion 11a substantially parallel to the vehicle height direction and a pair of side wall portions 11b and 11c continuous from an upper end and a lower end of the bottom portion 11a and substantially parallel to each other in the vehicle width direction. In addition, the collision energy absorptive part 11 is provided on the battery frame assembly 13 on the outer peripheral side in the vehicle width direction of the battery pack 5 in a protruding shape toward vehicle outside in the vehicle width direction while securing a space with the side sill 3. The collision energy absorptive part 11 is made of a steel sheet having a tensile strength of 270 MPa-class or more and 340 MPa-class or less and a plate thickness of 1.0 mm or more and 1.4 mm or less. In the present embodiment, the collision energy absorptive part 11 is joined to the outer peripheral face of the battery frame assembly 13 along the battery frame assembly 13 over an entire length of or a partial length of the vehicle length direction. The range of the tensile strength and the plate thickness of the steel sheet used for the collision energy absorptive part 11 will be described in Examples described later.

Then, in the automotive body side structure 1, at a time of a side collision in which a collision load is input to the side sill 3 from vehicle outside in the vehicle width direction, after the side sill 3 deformed by the input collision load comes into contact with the collision energy absorptive part 11, the collision energy absorptive part 11 is deformed to absorb the collision energy to reduce a load transferred to the battery pack 5.

An impact absorption part (corresponding to the collision energy absorptive part of the present application) in the technique disclosed in Patent Literature 1 absorbs collision energy while deforming the impact absorption part itself at the time of a side collision of a vehicle. However, as described above, since the closed cross section structure of the impact absorption part is robust, a collision load is transferred to the battery pack disposed vehicle inside in the vehicle width direction during deformation of the impact absorption part, and the battery pack may be damaged.

On the other hand, the automotive body side structure 1 according to the present embodiment has a cross-sectional structure that easily deforms the collision energy absorptive part 11, and is made of a thin steel sheet having a low tensile strength of 270 MPa-class or more and 340 MPa-class or less and a plate thickness of 1.0 mm or more and 1.4 mm or less. As a result, at a time of a side collision of a vehicle with the battery pack 5 disposed vehicle inside in the vehicle width direction relative to the side sill 3, after the deformed side sill 3 contacts the collision energy absorptive part 11, the collision energy absorptive part 11 is deformed to absorb the collision energy. This makes it more difficult for the collision load input to the vehicle to be transferred to the battery pack 5. As a result, it is possible to reduce the transfer load and to suppress deformation of the battery pack 5 at the time of a side collision, and it is possible to protect the battery pack 5 of the battery powered vehicle and to make a safe vehicle.

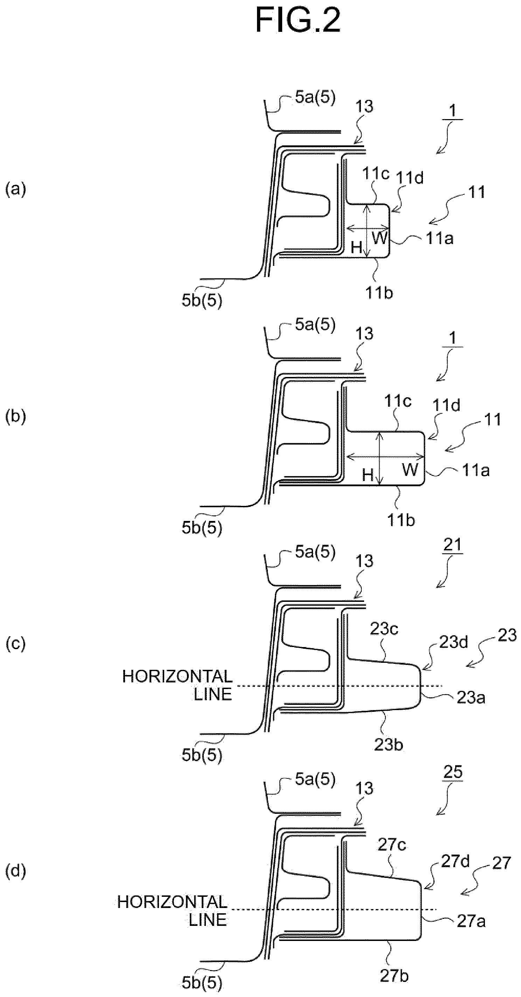

In the automotive body side structure 1, the collision energy absorptive part 11 is set so that the aspect ratio (W/H) of the width W in the vehicle width direction with respect to the height H in the vehicle height direction is within the range of 0.4 or more and 2.5 or less. For example, the automotive body side structure 1 illustrated in FIGS. 2(a) and 2(b) is a specific example in which the height H in the vehicle height direction of the collision energy absorptive part 11 is not changed and the width W in the vehicle width direction is set so that the aspect ratio W/H is in a range of 0.4 or more and 2.5 or less (FIG. 2(a): W/H = 0.86, FIG. 2(b): W/H = 1.43).

As a result, the collision energy absorptive part 11 can be provided between the side sill 3 and the battery pack 5, and the collision energy can be sufficiently absorbed by the collision energy absorptive part 11 at the time of the side collision.

In the above description, as illustrated in FIGS. 2(a) and 2(b), in the collision energy absorptive part 11, the pair of side wall portions 11b and 11c are horizontal in the vehicle width direction.

In the present invention, as in the collision energy absorptive part 23 illustrated in FIG. 2(c), it is preferable that a substantially U-shaped cross section 23d having a bottom portion 23a substantially parallel to the vehicle height direction and a pair of side wall portions 23b and 23c continuous from upper and lower ends of the bottom portion 23a is provided, and the pair of side wall portions 23b and 23c is inclined in a direction approaching each other toward vehicle outside in the vehicle width direction. Specifically, the inclination angles of the side wall portions 23b and 23c are preferably 20° or less with respect to the horizontal line in the vehicle width direction. The inclination angle of the side wall portion is an acute angle with respect to the horizontal line (hereinafter, the same shall apply).

Alternatively, as in the collision energy absorptive part 27 illustrated in FIG. 2(d), it is preferable that a substantially U-shaped cross section 27d having a bottom portion 27a substantially parallel to the vehicle height direction and a pair of side wall portions 27b and 27c continuous from upper and lower ends of the bottom portion 27a is provided, the side wall portion 27b is parallel to the horizontal line in the vehicle width direction, and the side wall portion 27c is inclined in a direction approaching the side wall portion 27b toward vehicle outside in the vehicle width direction. Specifically, the inclined side wall portion 27c preferably has an inclination angle of 20° or less with respect to the horizontal line in the vehicle width direction.

As described above, by inclining of the pair of side wall portions 23b and 23c of the collision energy absorptive part 23 or the side wall portion 27c of the collision energy absorptive part 27 with respect to the horizontal line in the vehicle width direction, the collision energy absorptive part has an inclined side wall portion, and thus, the collision energy absorptive part has an inclined side wall portion in which the cross section expands as the deformation progresses, so that the collision energy absorptive part can be easily collapsed at the initial stage of contact, and can be greatly deformed at the later stage of contact. Therefore, it is possible to further reduce the load transferred to the battery pack at the time of a side collision.

The reason why the inclination angle of the inclined side wall portions 23b and 23c or the inclination angle of the inclined side wall portion 27c has an upper limit of 20° is that when the inclination angle is larger than 20°, the side wall portions are less likely to be crushed or are buckled during plastic deformation so that the side wall portions are not completely crushed. On the other hand, when the inclination angle of the inclined side wall portions 23b and 23c or the inclined side wall portion 27c is 20° or less, the side wall portions 23b and 23c or the side wall portion 27b can be easily crushed, which is preferable in terms of absorbing collision energy.

As illustrated in FIG. 1, the automotive body side structure 1 according to the present embodiment includes the battery frame assembly 13, and the collision energy absorptive part 11 is provided on the outer peripheral face of the battery frame assembly 13 in the vehicle width direction. However, the automotive body side structure according to the present invention may not include the battery frame assembly. In this case, the collision energy absorptive part may be provided on the outer peripheral face of the battery pack in the vehicle width direction.

In the automotive body side structure 1 according to the present embodiment, the floor cross member 7 is disposed above the battery pack 5, and the ground side cross member 9 is disposed below the battery pack 5. However, in the present invention, only the floor cross member 7 may be disposed. Even in this case, after the side sill is deformed and comes into contact with the collision energy absorptive part, the collision energy absorptive part is deformed and absorbs the collision energy, so that the load transferred to the battery pack can be reduced and the deformation of the battery pack can be suppressed.

In the present embodiment, as described above, the collision energy absorptive part 11 is provided on the battery pack 5 while securing a predetermined space with the side sill 3. In order to reliably secure a space between the collision energy absorptive part 11 and the side sill 3, the width W of the collision energy absorptive part 11 is preferably set such that the bottom portion 11a of the collision energy absorptive part 11 is located vehicle inside in the vehicle width direction relative to the innermost position in the side sill 3 inside the vehicle (the position in the vehicle width direction of the bottom portion 3a1 of the side sill inner 3a).

### Examples

Since a specific analysis for verifying the operation and effect of the automotive body side structure according to the present invention was performed, the results thereof will be described below.

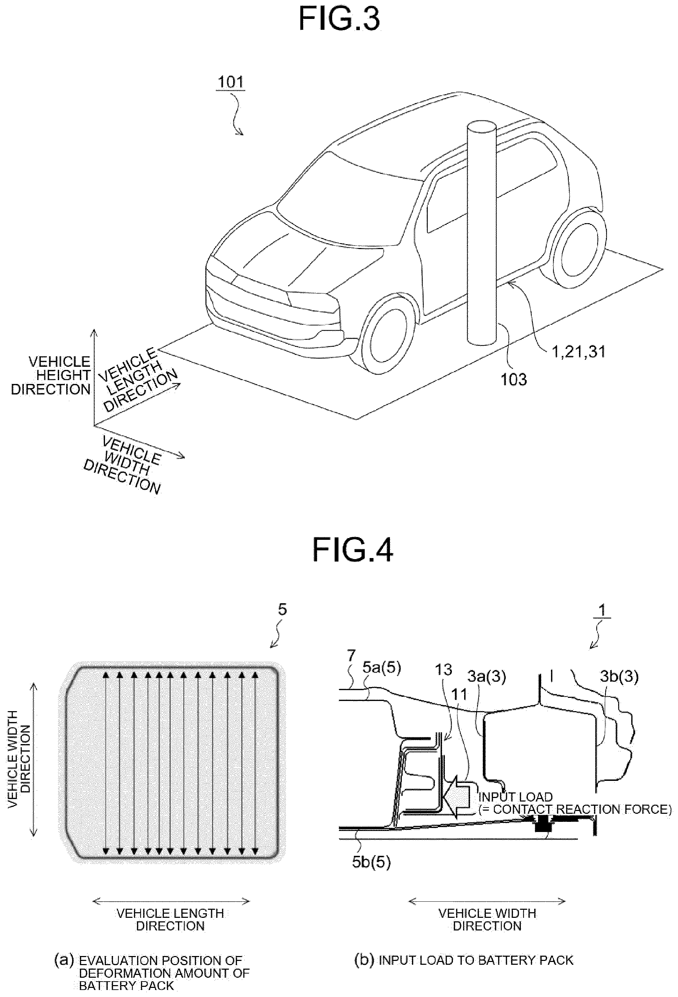

In the present example, as illustrated in FIG. 3, side collision analysis of causing a pole 103 to collide with a vehicle 101 from vehicle outside in the vehicle width direction, the vehicle including the automotive body side structure 1 (Invention Example) including the side sill 3, the battery pack 5, the floor cross member 7, and the ground side cross member 9 and including the collision energy absorptive part 11 illustrated in FIG. 1 in the above-described embodiment.

In the side collision analysis, the vehicle 101 was accelerated to 29 km/h in the vehicle width direction, and collided with the pole 103 which is a rigid body with respect to the side face of the vehicle 101. The pole collision positions at which the pole 103 collides with the vehicle 101 were set to two levels of vehicle length direction positions TL=1394 mm and 1916 mm. TL=1916 mm is a position in the vehicle length direction where the floor cross member 7 and the ground side cross member 9 (FIG. 1) are disposed, and TL=1394 mm is a position in the vehicle length direction where the floor cross member 7 and the ground side cross member 9 are not disposed.

When the pole 103 collides with the side sill 3 disposed at the side face of the vehicle 101, the side sill 3 (see FIG. 1) is locally deformed and advances inside the vehicle. Therefore, in the present example, the deformation amount of the battery pack 5 in the side collision process and the load input to the battery pack 5 were evaluated.

As for the deformation amount of the battery pack 5, as illustrated in FIG. 4(a), lengths in the vehicle width direction of the battery pack 5 before and after deformation were measured at a plurality of positions in the vehicle length direction (positions indicated by arrows in FIG. 4(a)), and a difference between before and after deformation was obtained. On the other hand, with respect to the load input to the battery pack 5, as illustrated in FIG. 4(b), the reaction force (contact reaction force) generated in the battery frame assembly 13 by the contact of the collision energy absorptive part 11 with the side sill inner 3a in the collision process was obtained.

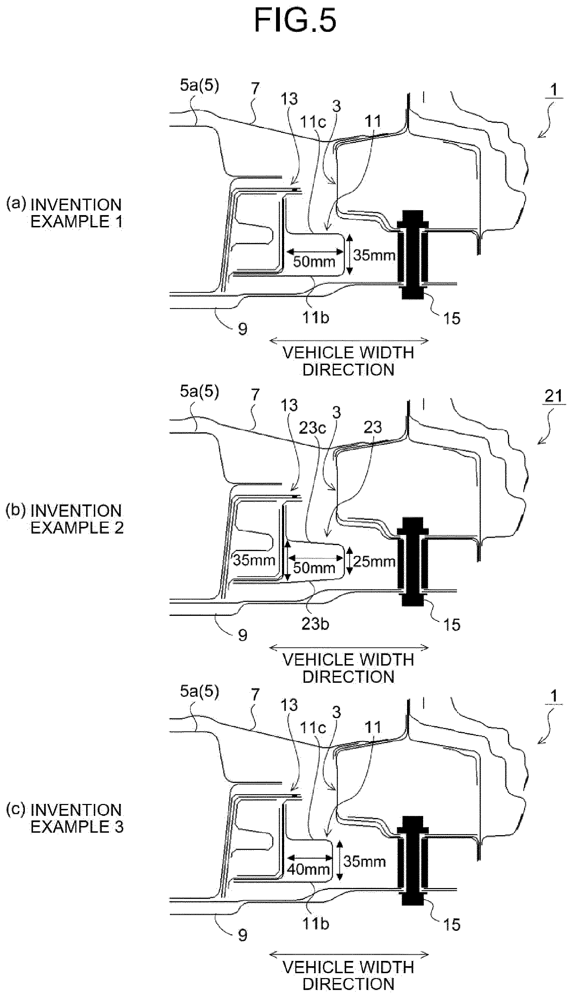

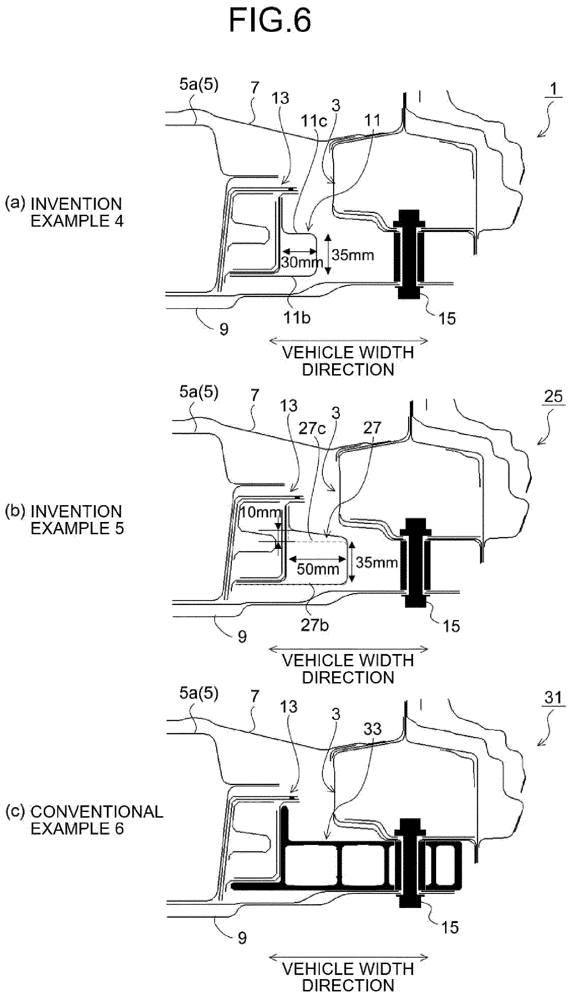

In the present example, as illustrated in FIGS. 5 and 6, the sizes and shapes of the collision energy absorptive parts 11, 23, and 27 are changed within the scope of the present invention as Invention Example 1 to Invention Example 5.

In Invention Example 1, as illustrated in FIG. 5(a), the side wall portions 11b and 11c of the collision energy absorptive part 11 are both horizontal in the vehicle width direction, and the width W is 50 mm and the height H is 35 mm.

In Invention Example 2, as illustrated in FIG. 5(b), both the side wall portions 23b and 23c of the collision energy absorptive part 23 are inclined in a direction approaching each other toward vehicle outside in the vehicle width direction with respect to the horizontal line in the vehicle width direction, and the height at the outermost position in the vehicle width direction is set to 25 mm while the height at the innermost position is set to be equal to the height (=35 mm) of Invention Example 1.

In Invention Example 3, as illustrated in FIG. 5(c), the width W of the collision energy absorptive part 11 is set to be smaller than that in Invention Example 1 to be 40 mm.

In Invention Example 4, as illustrated in FIG. 6(a), the width W of the collision energy absorptive part 11 is further reduced to 30 mm as compared with Invention Example 3.

In Invention Example 5, as illustrated in FIG. 6(b), the side wall portion 27b of the collision energy absorptive part 27 is parallel to the horizontal line in the vehicle width direction, and the side wall portion 27c is inclined in a direction approaching the side wall portion 27b toward vehicle outside in the vehicle width direction with respect to the horizontal line in the vehicle width direction, and the height at the innermost position is larger by 10 mm than the height (=35 mm) of Invention Example 1.

Furthermore, in the present example, as comparison targets, the automotive body side structure 21 (Conventional Example) illustrated in FIG. 6(c) and the automotive body side structure 1 (Comparative Examples 1 to 6) in which the tensile strength and the plate thickness of the steel sheet used for the collision energy absorptive part 11 were out of the preferable range of the present invention as illustrated in Table 1 were also subjected to the side collision analysis of the vehicle 101 illustrated in FIG. 3 in the same manner as in the Invention Examples (Invention Example 1 to Invention Example 5), and the deformation amount of the battery pack 5 in the side collision process and the load input to the battery pack 5 were evaluated. In Table 1, the height H indicates the vehicle outer side height in the vehicle width direction.

**Table 1**

| | Maximum load of contact reaction force (kN) | Collision energy absorptive part | | |
|---|---|---|---|---|
| | | Hight H [mm] | Width W [mm] | Aspect ratio W/H [-] |
| Conventional Example | 254 | - | - | - |
| Invention Example 1 | 86 | 35 | 50 | 1.43 |
| Invention Example 2 | 79 | 25 | 50 | 2.00 |
| Invention Example 3 | 89 | 35 | 40 | 1.14 |
| Invention Example 4 | 81 | 35 | 30 | 0.86 |
| Invention Example 5 | 90 | 35 | 50 | 1.43 |
| Comparative Example 1 | 162 | 15 | 50 | 3.33 |
| Comparative Example 2 | 165 | 35 | 10 | 0.29 |
| Comparative Example 3 | 118 | 60 | 20 | 0.33 |
| Comparative Example 4 | 115 | 15 | 40 | 2.67 |
| Comparative Example 5 | 145 | 35 | 100 | 2.86 |
| Comparative Example 6 | 156 | 100 | 30 | 0.30 |

As illustrated in FIG. 6(c), an automotive body side structure 31 according to the Conventional Example includes the side sill 3 having the side sill inner 3a and the side sill outer 3b, and a lower part of the side sill 3 and the battery frame assembly 13 are connected by a connecting member 33 made of aluminum.

The deformation amount of the battery pack 5 in the Conventional Example was obtained in the same manner as in Invention Example (see FIG. 4). In addition, in the Conventional Example, the load input to the battery pack 5 was obtained as the contact reaction force between the connecting member 33 and the battery frame assembly 13.

In Comparative Example 1, the height H is reduced to 15 mm while the width is equal to the width W (=50 mm) of the collision energy absorptive part 11 of Invention Example 1, and the aspect ratio W/H is set to be larger than the range of the present invention (0.4 or more and 2.5 or less) (=3.33). In Comparative Example 2, the width W is reduced to 10 mm while the height is equal to the height H (=35 mm) of the collision energy absorptive part 11 of Invention Example 1, and the aspect ratio W/H is set to be smaller (=0.29) than the range of the present invention (0.4 or more and 2.5 or less). In Comparative Example 3, both the height H and the width W of the collision energy absorptive part 11 were changed, and the aspect ratio W/H was set to be smaller (=0.33) than the range of the present invention (0.4 or more and 2.5 or less). In Comparative Example 4, both the height H and the width W of the collision energy absorptive part 11 were changed, and the aspect ratio W/H was set to be larger (=2.67) than the range of the present invention (0.4 or more and 2.5 or less). In Comparative Example 5, the width W is increased to 100 mm and the aspect ratio W/H is set to be larger (=2.86) than the range of the present invention (0.4 or more and 2.5 or less) while the height is equal to the height H (=35 mm) of the collision energy absorptive part 11 of Invention Example 1. In Comparative Example 6, both the height H and the width W of the collision energy absorptive part 11 were changed, and the aspect ratio W/H was set to be smaller (=0.30) than the range of the present invention (0.4 or more and 2.5 or less).

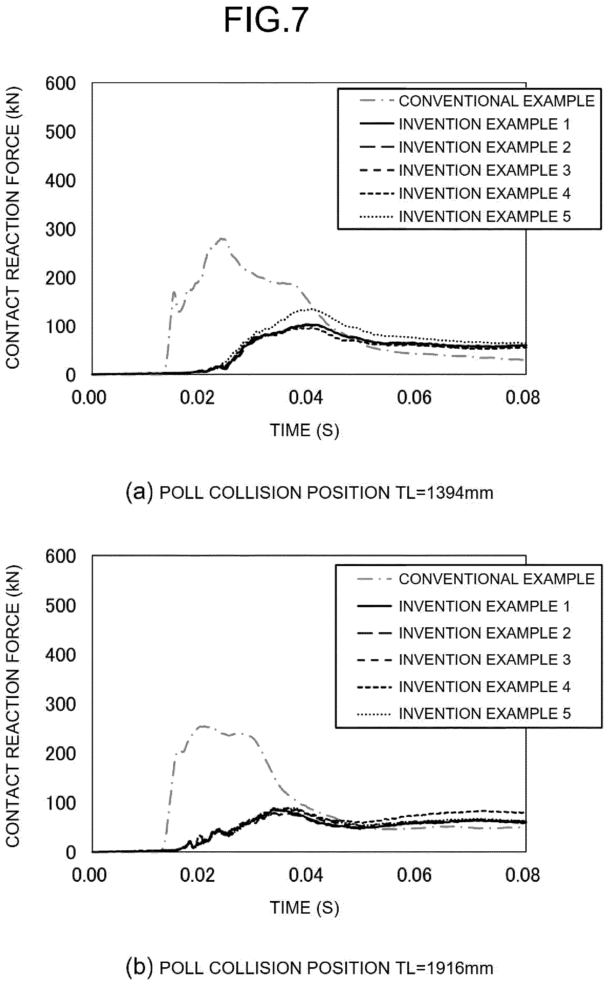

FIG. 7 illustrates results of contact reaction force obtained as a load to be input to the battery pack 5 at a time of a side collision in which the pole collision position is set to the vehicle length direction positions TL=1394 mm (FIG. 7(a)) and 1916 mm (FIG. 7(b)) in Invention Example 1 to Invention Example 5 and the Conventional Example. As illustrated in FIG. 7, it can be seen that the contact reaction force in each of Invention Examples 1 to 5 is significantly lower than that in the Conventional Example at any pole collision position.

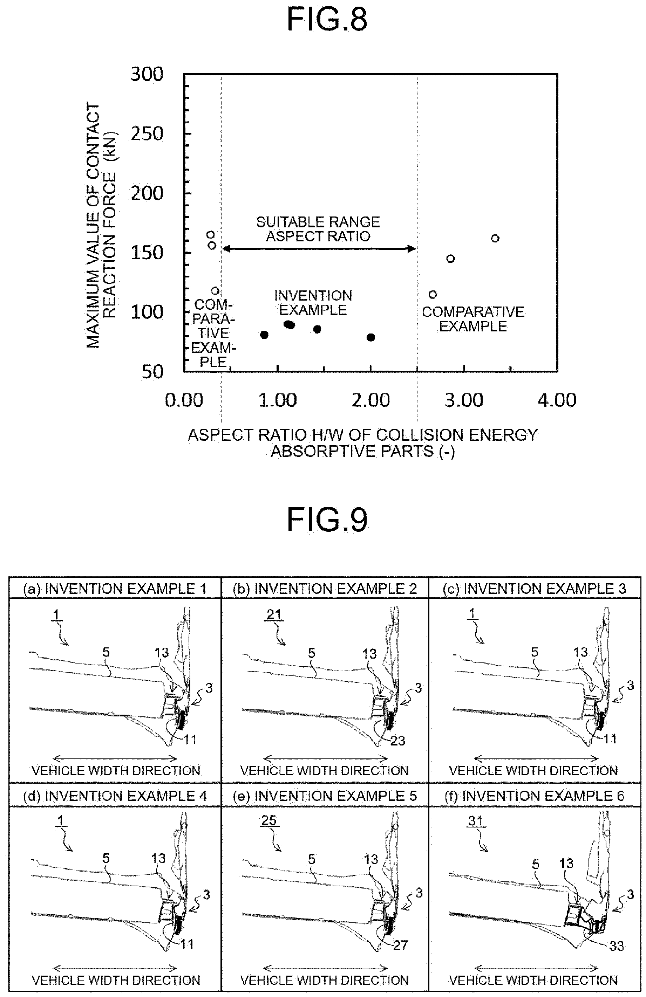

FIG. 8 is a graph illustrating the relationship between the maximum value of the contact reaction force obtained as the load input to the battery pack 5 at the time of a side collision of the vehicle 101 and the aspect ratio W/H of the collision energy absorptive part 11 in a case where the aspect ratio W/H of the collision energy absorptive part 11 is changed. In addition, Table 1 described above illustrates the maximum value of the contact reaction force obtained for each of Invention Examples 1 to 5 and Comparative Examples 1 to 6.

As illustrated in FIG. 8 and Table 1, the maximum value of the contact reaction force was larger than 100 kN when the aspect ratio W/H of the collision energy absorptive part 11 was less than 0.4 or more than 2.5 that is outside the range of the present invention, but was 100 kN or less when the aspect ratio W/H was 0.4 or more and 2.5 or less within the range of the present invention.

FIG. 9 illustrates a state of deformation after the end of collision when the vehicle 101 including the automotive body side structures 1, 21, 25, and 31 according to Invention Examples 1 to 5 and the Conventional Example side collides with the pole 103.

In the Conventional Example (FIG. 9(f)), the connecting member 33 connecting the side sill 3 and the battery frame assembly 13 is not sufficiently deformed or completely crushed, and the load input to the vehicle 101 is transferred to the battery pack 5, so that the battery pack 5 is deformed.

In contrast, in each of the automotive body side structures 1, 21, and 25 according to Invention Examples 1 to 5, the collision energy absorptive parts 11, 23, and 27 are sufficiently deformed and completely crushed. Accordingly, in Invention Example 1 to Invention Example 5, it can be seen that after the side sill 3 is deformed to come into contact with the collision energy absorptive part 11, the collision energy is further absorbed to reduce the load transferred to the battery pack 5, thereby protecting the battery pack 5.

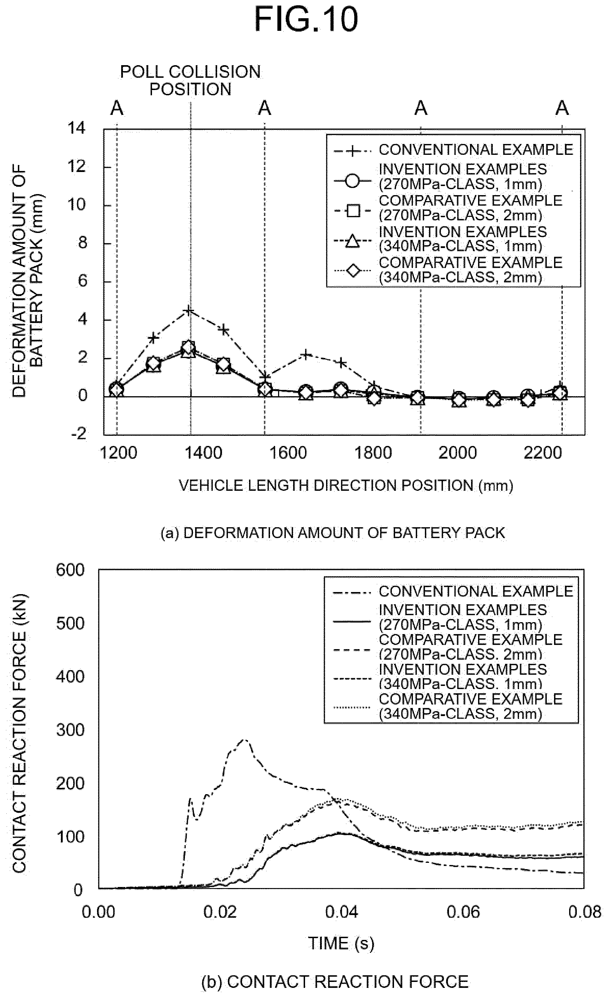

FIG. 10 illustrates results of temporal changes in the deformation amount of the battery pack 5 and the contact reaction force at the time of a side collision of the vehicle 101 in a case where the tensile strength and the plate thickness of the steel sheet used for the collision energy absorptive part 11 are changed. The floor cross member 7 and the ground side cross member 9 (FIG. 1) are disposed at the vehicle length direction positions TL=1230 mm, 1569 mm, 1916 mm, and 2243 mm (A in FIG. 10), and FIG. 10 illustrates a result when the vehicle length direction position TL=1394 mm, that is, the position where the floor cross member 7 and the ground side cross member 9 are not disposed is defined as the pole collision position.

With respect to the deformation amount of the battery pack 5, as illustrated in FIG. 10(a), the results illustrated in the Invention Examples and the Comparative Examples were lower than those of the Conventional Example in any tensile strength and plate thickness. However, the deformation amount of the battery pack is smaller in the Invention Examples in which the plate thickness is thin, compared with that in the Comparative Examples. Furthermore, the deformation amounts of the battery pack in a case where the plate thickness was equal and the tensile strength was different hardly changed, and the influence of the tensile strength was slight.

With respect to the contact reaction force, as illustrated in FIG. 10(b), the results illustrated in the Invention Examples and the Comparative Examples were lower than those of the Conventional Example in any tensile strength and plate thickness. However, the contact reaction force of the Invention Examples having a thin plate thickness was lower than that of the Comparative Examples. Furthermore, the contact reaction forces in a case where the plate thickness was equal and the tensile strength was different hardly changed, and the influence of the tensile strength was slight.

From the results illustrated in FIG. 10, it was found that when the collision energy absorptive part 11 have a steel sheet having the tensile strength of 270 MPa-class or more and 340 MPa-class or less and a plate thickness of less than 2 mm, specifically 1.4 mm or less, the collision energy absorptive part 11 can be easily deformed at the time of a side collision to absorb the collision energy and sufficiently reduce the input load to the battery pack 5.

### Industrial applicability

According to the present invention, it is possible to provide an automotive body side structure capable of efficiently and reliably absorbing collision energy and protecting a battery pack at a time of a side collision of a vehicle body including a side sill and a battery pack disposed vehicle inside in the vehicle width direction relative to the side sill.

### Reference Signs List

1 AUTOMOTIVE BODY SIDE STRUCTURE
3 SIDE SILL
3a SIDE SILL INNER
3a1 BOTTOM PORTION
3a2 SIDE WALL PORTION
3a3 SIDE WALL PORTION
3b SIDE SILL OUTER
5 BATTERY PACK
5a BATTERY PACK UPPER
5b BATTERY PACK LOWER
7 FLOOR CROSS MEMBER
7a END PORTION
9 GROUND SIDE CROSS MEMBER
9a END PORTION
11 COLLISION ENERGY ABSORPTIVE PART
11a BOTTOM PORTION
11b SIDE WALL PORTION
11c SIDE WALL PORTION
11d SUBSTANTIALLY U-SHAPED CROSS SECTION
13 BATTERY FRAME ASSEMBLY
15 BOLT
21 AUTOMOTIVE BODY SIDE STRUCTURE
23 COLLISION ENERGY ABSORPTIVE PART
23a BOTTOM PORTION
23b SIDE WALL PORTION
23c SIDE WALL PORTION
23d SUBSTANTIALLY U-SHAPED CROSS SECTION
25 AUTOMOTIVE BODY SIDE STRUCTURE
27 COLLISION ENERGY ABSORPTIVE PART
27a BOTTOM PORTION
27b SIDE WALL PORTION
27c SIDE WALL PORTION
27d SUBSTANTIALLY U-SHAPED CROSS SECTION
31 AUTOMOTIVE BODY SIDE STRUCTURE
33 CONNECTING MEMBER
101 VEHICLE
103 POLE

## Claims

1. An automotive body side structure comprising:
a side sill extending in a vehicle length direction; and
a battery pack disposed vehicle inside in a vehicle width direction relative to the side sill, wherein
the automotive body side structure includes a collision energy absorptive part having a substantially U-shaped cross section, the substantially U-shaped cross section including: a bottom portion substantially parallel to a vehicle height direction; and a pair of side wall portions continuous from an upper end and a lower end of the bottom portion,
the collision energy absorptive part is provided in a protruding shape toward vehicle outside in the vehicle width direction while securing a space with the side sill on an outer peripheral side in the vehicle width direction of the battery pack,
the collision energy absorptive part is made of a steel sheet having a tensile strength of 270 MPa-class or more and 340 MPa-class or less and a plate thickness of 1.0 mm or more and 1.4 mm or less, and
at a time of a side collision in which a collision load is input to the side sill from vehicle outside in the vehicle width direction, after the side sill deformed by the input collision load comes into contact with the collision energy absorptive part, the collision energy absorptive part is deformed to absorb collision energy to reduce a load transferred to the battery pack.

2. The automotive body side structure according to claim 1, wherein the collision energy absorptive part has an aspect ratio of a width in the vehicle width direction with respect to a height in the vehicle height direction in a range of 0.4 or more and 2.5 or less.

3. The automotive body side structure according to claim 1 or 2, wherein the collision energy absorptive part is inclined in a direction in which the pair of side wall portions approach each other toward vehicle outside in the vehicle width direction.

4. The automotive body side structure according to claim 1 or 2, wherein the collision energy absorptive part includes one of the side wall portions parallel to a horizontal line in the vehicle width direction and another one of the side wall portions inclined in a direction approaching the one of the side wall portions toward vehicle outside in the vehicle width direction.
